# EUROPÄISCHE PATENTSCHRIFT

(11) **EP 1 866 242 B1**
(45) Veröffentlichungstag und Bekanntmachung des Hinweises auf die Patenterteilung: **30.04.2014**
(21) Anmeldenummer: 06707507.7
(22) Anmeldetag: 09.03.2006
(51) Int. Cl.: H01M 4/485, H01M 4/505, H01M 4/525, H01M 10/0525

(54) **KRISTALLINES IONENLEITENDES NANOMATERIAL UND VERFAHREN ZU SEINER HERSTELLUNG**
CRYSTALLINE ION-CONDUCTING NANOMATERIAL AND METHOD FOR THE PRODUCTION THEREOF
NANOMATERIAU CRISTALLIN CONDUISANT LES IONS ET PROCEDE DE FABRICATION

(30) Priorität: 05.04.2005 DE 102005015613
(43) Veröffentlichungstag der Anmeldung: 19.12.2007
(73) Patentinhaber: Süd-Chemie IP GmbH & Co. KG, 80333 München (DE)
(72) Erfinder: SCHALL, Norbert, 85659 Forstern (DE); NUSPL, Gerhard, 85659 Forstern (DE); VOGLER, Christian, 85368 Moosburg (DE); WIMMER, Lucia, 84034 Landshut (DE); EISGRUBER, Max, 84079 Bruckberg (DE)
(74) Vertreter: Stolmár, Matthias
(86) Internationale Anmeldenummer: PCT/EP2006/002199
(87) Internationale Veröffentlichungsnummer: WO 2006/105848

(56) Entgegenhaltungen:
- WO-A-99/33129
- WO-A-02/099913
- WO-A-2005/051840
- WO-A2-02/083555
- US-A- 3 558 273
- DATABASE WPI Week 200474 Derwent Publications Ltd., London, GB; AN 2004-751801 XP002406043 & JP 2004 296367 A (SUMITOMO CEMENT CO LTD) 21. Oktober 2004 (2004-10-21)
- ARNOLD G ET AL: "Fine-particle lithium iron phosphate LiFePO4 synthesized by a new low-cost aqueous precipitation technique" JOURNAL OF POWER SOURCES, ELSEVIER, AMSTERDAM, NL, Bd. 119-121, 1. Juni 2003 (2003-06-01), Seiten 247-251, XP004430175 ISSN: 0378-7753
- ANDERSSON A S ET AL: "Lithium extraction/insertion in LiFePO4: an X-ray diffraction and Mossbauer spectroscopy study" SOLID STATE IONICS, NORTH HOLLAND PUB. COMPANY. AMSTERDAM, NL, Bd. 130, Nr. 1-2, Mai 2000 (2000-05), Seiten 41-52, XP004197786 ISSN: 0167-2738

## Beschreibung

Die vorliegende Erfindung betrifft das Gebiet eindimensionaler Ionenleiter, insbesondere ein kristallines ionenleitendes Nanomaterial, bevorzugt eine Lithium-Insertionsverbindung mit überwiegend eindimensionaler Ionenleitung und ein Verfahren zu seiner Herstellung.

Die Verwendung von festen Ionenleitern nimmt in letzter Zeit insbesondere auf dem Gebiet der Lithiumionenbatterien immer mehr zu. Lithiumionenbatterien ermöglichen eine weitreichende Miniaturisierung und eröffnen dadurch weitere Anwendungsfelder als herkömmliche Batterien auf Nickel-Cadmium Basis.

Es wurden verschiedenen Materialien vorgeschlagen, die als Elektrodenmaterialien in Lithiumbatterien Verwendung finden können. Daneben wurde auch insbesondere die Struktur und Form derartiger Materialien untersucht, die einen großen Anteil an der Leistungsfähigkeit dieser Materialien haben (Tang und Holzwarth, Phys. Rev. B 68, 165107 (2003)).

Neben Lithiumcobaltaten, -nickelaten und Lithiummetallvanadaten wurde in letzter Zeit insbesondere Lithiummetallphosphate bzw. deren dotierte Derivate, die eine Olivinstruktur aufweisen vorgeschlagen (Goodenough et al. J. Electrochem. Soc. Vol. 144 (1997), US 5,910,382, JP-3484003 B).

Das Dokument JP 2004 296367 A offenbart ein kristallines ionenleitendes Material bestehend aus LiMPO4 Nanopartikeln, wobei M ausgewählt ist aus Cr, Mn, Co, Fe und Ni sowie Mischungen davon, wobei die Nanopartikel plättchenformig sind.

Das Dokument WO 02/083555 A2 offenbart ein Verfahren zur Herstellung von binären, ternären und quaternären Lithiumphosphaten der Formel Li(FeM₁M₂)PO₄. Vorläuferverbindungen der Elemente Li, Fe, M₁ und/oder M₂ werden aus wässriger Lösung ausgefällt und das Fällungsprodukt wird unter einer nichtoxidierenden Atmosphäre getrocknet und anschließend getempert.

Das Dokument WO 2005/051840 beschreibt Verbindungen der allgemeinen Summenformel LiMPO₄, wo M mindestens ein Metall der ersten Übergangsreihe darstellt. Allgemein ist M aus mindestens einem Metall der Gruppe bestehend aus Fe, Sc, Ti, V, Cr, Mn, Co, Ni, Cu, Zn, Be, Mg, Ca, Sr, Ba, Al, Zr, und La, ausgewählt. Das Material aus diesem Dokument besteht aus nanoskaligen LiMPO₄ Kristallplättchen, die eine sehr enge Teilchengrößenverteilung sowie eine sehr geringe Teilchengröße haben.

Insbesondere haben sich darunter Lithiumeisenphosphat bzw. dessen strukturanaloge dotierte Derivate als besonders erfolgsversprechend herausgestellt. Die Morphologie und ihr Einfluß auf die elektrochemischen Eigenschaften von LiFePO₄, dessen dotierte Derivate sowie deren ggf. mit Kohlenstoff beschichteten Kristallite ist in der US 2004/0033360 offenbart.

In der LiFePO₄ Struktur bilden die Oxidionen eine hexagonal dichteste Packung (hcp). Die Eisenionen (bzw. die sie teilweise ersetzenden Metallionen bei den dotierten Derivaten) bilden zick-zackförmige oktaedrische Ketten in alternierenden basalen Ebenen, die durch tetraedrische Phosphatgruppen verbrückt sind. Die starke kovalente P-O Bindung in den Phosphattetraedern ermöglicht eine stärkere Stabilisierung der Struktur verglichen mit schichtförmigen Oxiden wie LiCoO₂. Diese Stabilisierung verhindert, dass das Phosphat im delithiierten Zustand bei erhöhter Temperatur Sauerstoff freisetzt, was die Sicherheit einer daraus hergestellten Batterie verbessert.

LiFePO₄ ist ein sogenannter eindimensionaler Leiter, bei dem die Lithiumionenleitung senkrecht zu den 0k0 Gitternetzebenen im Kristall erfolgt.

Es ist bekannt, dass die Mikromorphologie elektrisch leitender Materialien ihre Leistung und Kapazität beeinflusst. Im Allgemeinen haben kleinere Partikel eine größere Oberfläche und damit einer höhere Leistung, wohingegen größere Partikel eine geringere Oberfläche und eine niedrigere Leistung aufweisen. Andererseits scheint der Verdichtungseffekt bei kleineren Partikeln weniger effizient zu sein. Außerdem lassen sich kleinere Partikel beispielsweise schlechter auf Oberflächen packen zu lassen. Typischerweise nimmt man bislang daher größere Partikel in Kauf, die einfacher zu packen sind, aber generell die Gesamtenergiekapazität erniedrigen.

Narang et al. (US 6,337,156) beschreiben eine spezielle optimierte Morphologie für eine spezielle Metalloxidstruktur für den Einsatz dieser Metalloxide in Elektroden. Diese Metalloxide sind die von LiFePO₄ strukturell verschiedenen Schichtstrukturen von LiCoO₂ und LiNiO₂. Demnach besteht anscheinend eine Korrelation zwischen dieser speziellen Schichtstruktur besagter Kristalle und der von Narang et al. offenbarten geometrischen Erfordernisse an die Partikelmorphologie. Demzufolge müssen Partikel aus Materialien dieser Verbindungsklasse eine Länge von mindestens ca. 20 µm in ihrer längsten Dimension (geometrische Vorzugsrichtung) aufweisen. Kleinere Partikel sind für diese Materialien ungeeignet. Die Morphologie dieser großen Partikel kann so verschiedene Formen wie, Nadeln, Bänder, Fasern etc annehmen und ist willkürlich wählbar, solange nur die längste Dimension der geometrischen Form größer ist als die anderen beiden und eine Länge von mindestens ca. 20 µm aufweist. Jedoch weisen die derart hergestellten Elektroden keine gute Kapazität auf.

Die aus der unterschiedlichen Kristallstruktur herrührende besondere Problematik der Morphologie von Metallphosphaten der allgemeinen Formel LiMPO₄ mit Olivinstruktur gegenüber den Schichtoxiden wird bei Narang et al. nicht erwähnt.

Es bestand daher die Aufgabe, eine optimierte Morphologie für Materialien der allgemeinen Formel LiMPO₄ mit Olivinstruktur bereitzustellen, die verbesserte elektrochemische Eigenschaften wie z.B. verbesserte Lithiumionenleitfähigkeit aufweisen. Diese Aufgabe wird gelöst durch die Bereitstellung eines kristallinen ionenleitenden Materials bestehend aus LiMPO₄ Nanopartikeln, wobei M ausgewählt ist aus Cr, Mn, Co, Fe und Ni sowie Mischungen davon, wobei die Nanopartikel eine im Wesentlichen flachprismatische Form und eine monomodale Größenverteilung aufweisen. In weiteren bevorzugten Ausführungsformen weist das Material auch eine bimodale Größenverteilung auf.

Das erfindungsgemäße Material hat eine Olivinstruktur (Raumgruppe Nr. 62, Pnma), dessen Elementarzelle durch die flachprismatische Struktur so gelegen kommt, dass eine Schar von aufeinanderfolgenden Gitternetzebenen parallel zur Grundfläche des Prismas verläuft. Es sollten vorzugsweise in dem flachen Prisma daher mindestens zwei parallele Gitternetzebenen zu liegen kommen, da dies leichter herzustellen ist. Natürlich sind auch erfindungsgemäße Nanopartikel herstellbar, die nur eine einzige Gitternetzebene enthalten. Es versteht sich, dass neben den reinen Metallphosphaten auch deren dotierte Analoga in dem Umfang der Erfindung fallen, d.h. Phosphate, deren Übergangsmetallgitterplätze durch zwei oder mehr verschiedene Übergangsmetallionen wie Mn, Co, Cr, Fe usw. besetzt sein können und beispielsweise durch die nichtstöchiometrischen Formeln wie LiM₁ₓM_{2y}PO₄, LiM₁ₓM_{2y}M_{3z}O₄ etc beschrieben werden können.

Lithium-Metall-Phosphate in Olivinstruktur lassen sich wie schon vorstehend erwähnt strukturell in der rhombischen Raumgruppe Pnma (Nr. 62 der Internationalen Tabellen) beschreiben, wobei die kristallografische Aufstellung der rhombischen Elementarzelle hier bevorzugt so gewählt ist, dass die a-Achse die längste Achse und die c-Achse die kürzeste Achse der Elementarzelle Pnma ist, so dass die Spiegelebene m der Olivinstruktur senkrecht zur b-Achse zu liegen kommt. Dann ordnen sich die Lithiumionen des Lithium-Metall-Phosphates in Olivinstruktur parallel zur Kristallachse [010] bzw. senkrecht zur Kristallfläche {010} an, die damit auch die bevorzugte Richtung für die eindimensionale Lithiumionenleitung ist.

Bevorzugt ist die Schar der aufeinanderfolgenden Gitternetzebenen die Schar der 0k0 Gitternetzebenen, worin k eine ganze Zahl ≥ 1 ist. Senkrecht zu dieser Schar der 0k0 Gitternetzebenen erfolgt die Lithiumionenleitung, da dort insbesondere der Li-Li Abstand im Festkörper minimiert ist.

Ganz besonders bevorzugt enthält die Schar der 0k0 Gitternetzebenen die 020 Gitternetzebene, durch die - bedingt durch die Kristallstruktur, d.h. der Position der Lithiumionen im Festkörper - der größte Teil der Lithiumionenleitung erfolgt. Mit anderen Worten, das erfindungsgemäße Material besteht morphologisch aus Kristallen mit flachprismatischem Habitus nach {010}, die sich in der Ebene, insbesondere in einer Batterieelektrode, besonders dicht packen lassen. D. h. die beiden Flächen des rhombischen Pinakoids {010} sind flächenmäßig am größten, also als Basalflächen ausgebildet, während die übrigen Kristallflächen {hkl} klein bzw. schmal ausgebildet sind, damit ein möglichst kurzer Leitungspfad für die Lithiumionen senkrecht zu {010} bei dennoch dichter Partikelpackung gewährleistet ist.

Im erfindungsgemäßen Material liegen auf struktureller Ebene die Gitternetzebenenscharen (0k0) parallel zur morphologischen Kristallfläche {010}. Wenn sich die erfindungsgemäßen, nach {010} flachprismatischen Kristalle in der Ebene, z.B. auf einem Probenträger bevorzugt parallel nach {010} anordnen, sind auch die Gitternetzebenenscharen (0k0) bevorzugt parallel zu dieser Ebene angeordnet und die Orientierungsfunktion der Netzebenenormalen zu (0k0) besitzt ein Maximum in Richtung der Ebenennormalen des Probenträgers. Dem entsprechend besitzen die Orientierungsfunktionen der senkrecht dazu stehenden Netzebenenormalen zu (h01) ein Minimum in Richtung der Ebenennormalen. In einer Pulverprobe mit statistisch verteilter Orientierung der Kristalle hingegen besitzt üblicherweise keine der Orientierungsfunktionen ein Maximum oder Minimum.

Röntgenstrahlpulverdiffraktometrie nach Bragg-Brentano Geometrie beruht auf der Reflexion monochromatischer Röntgenstrahlung an den Netzebenscharen eines Kristallgitters und hat die Eigenschaft, dass nur solche Netzebenscharen einen Reflex ergeben, die parallel zum Fokussierungskreis des Diffraktometers liegen. Das bedeutet, dass die Intensitäten der gemessenen Röntgenreflexe mit der Orientierungsfunktion der zugehörigen Netzebenscharen senkrecht zur Fokussierungskreis-Tangentialebene gewichtet werden. Folglich sind die Röntgenreflexe mit den Indizes 0k0 des erfindungsgemäßen Materials relativ intensitätsstärker und die Röntgenreflexe h01 relativ intensitätsstärker die Röntgenreflexe eines Vergleichsmaterials ohne Vorzugsorientierung nach {010}, vorausgesetzt man verwendet eine Präparationsmethode der Röntgenprobe, die ein paralleles Anordnen der erfindungsgemäßen flachprismatischen Kristalle nach {010} ermöglicht und vorausgesetzt, die Probe wird mit der Orientierungsebene tangential zum Fokussierungskreis des Diffraktometers montiert. Dieses unterschiedliche Intensitätsverhältnis wird als "Textureffekt" bezeichnet. Anders ausgedrückt: der Begriff "Textureffekt" ist ein Ausdruck für die Verteilung von verschiedenen Kristallflächen in dem Material. Das bedeutet, dass die Mehrzahl der Netzebenen in einem Kristall, vorzugsweise einer Schar von Netzebenen mit einer erhöhten Wahrscheinlichkeit vorhanden ist. Im Rahmen der vorliegenden Erfindung wird dieser Effekt für die Gruppe der (0k0) Ebenen in [0k0] Richtung beobachtet, was vorteilhafterweise dazu führt, dass der Lithiumionentransfer durch das erfindungsgemäße Nanomaterial, der senkrecht durch zu dieser Kristallflächen erfolgt, ermöglicht und verbessert wird.

Man kann selbstverständlich auch eine die flachprismatischen Kristalle aufweisendes Substrat, auf dem die flachprismatischen Kristalle vorzugsweise parallel zur Substratebene orientiert sind, direkt im Diffraktometer tangential zum Fokussierungskreis montieren. Der Textureffekt ist somit zusammen mit der Rasterektronenmikroskopie als Nachweis des erfindungsgemäßen Materials geeignet.

Der Textureffekt kann besonders vorteilhaft am Intensitätsverhältnis der überlagerten Reflexe 020+211 zu 301 festgestellt werden, weil diese Reflexe im Röntgenpulverdiffraktogramm nahe beieinander liegen und daher für sie ähnliche systematische Fehler gelten, so dass ihr Intensitätsverhältnis besonders zuverlässig gemessen werden kann. Es hat sich gezeigt, dass sich das so präparierte und gemessene erfindungsgemäße Material durch ein Intensitätsverhältnis I(020+211) : I(301) größer 2,6 : 1, bevorzugt größer 3 : 1, besonders bevorzugt größer 3,5 : 1 auszeichnet. In ganz besonders vorteilhaften Ausführungsformen ist dieses Verhältnis sogar größer 6 : 1, noch bevorzugter größer 12 : 1.

Überraschenderweise vermindert dieser Textureffekt die Diffusionsweglänge von Lithiumionen in [0k0] Richtung um mehr als 10% verglichen mit einem Lithiumübergangsmetallphosphat-Material ohne einen derartigen Textureffekt. Vorzugsweise wird die Länge der Diffusionsweglänge um mehr als 25%, noch mehr bevorzugt um mehr als 50% vermindert.

Der Textureffekt wird ebenfalls in gemischten (dotierten) Phosphaten wie LiFe₁₋ₓM'_{y}M''_{z}M'''ᵤPO₄ beobachtet, die ebenfalls für die Zwecke der vorliegenden Erfindung unter die allgemeine Formel LiMPO₄, wie sie vorstehend angegeben ist, fallen. Bei diesen gemischten oder dotierten Verbindungen, besetzen eines oder mehrere verschiedene Übergangsmetalle M', M'', M''', wie Ni, Co, Mn, Ti etc. in verschiedenen Konzentrationen und verschiedener Anzahl die oktaedrischen Plätze der Eisenoktaeder in der Olivinstruktur, und bei denen x, y, z und u eine Zahl zwischen 0 und 1 darstellt und (y + z + u) ≤ x ist. Es versteht sich, dass ebenfalls Isoladungs- und aliovalente Substitutionen innerhalb der vorstehend erwähnten allgemeinen Formeln enthalten sind.

In einer weiteren bevorzugten Ausführungsform besteht das flache Prisma der Kristalle des erfindungsgemäßen Nanomaterials aus einem n-seitigen Prisma, wobei n eine ganze Zahl ≥ 4 ist. Es hat sich gezeigt, dass trigonale Prismen zwar ebenfalls sehr gute elektrische Eigenschaften verleihen, aber im Hinblick auf die Packung derartiger Flachprismen-Kristalle polygonale Prismen, die der vorstehenden Bedingung genügen, besonders bevorzugt sind. Anders gesagt sind die Kristallflächen {010} weitgehend isometrisch ausgebildet und mit 4 oder mehr, senkrecht zu {010} stehenden, schmalen und langgestreckten Kristallflächen {h01} kombiniert. Besonders bevorzugt ist die Kombination isometrischer pseudohexagonaler Flächen {010} mit 6 Kristallflächen {h01}, weil sich sechsseitige flachprismatische Partikel in der Ebene besonders leicht flach anordnen und dicht packen lassen.

Es ist weiter bevorzugt, dass die Dimensionen des Prismas der Bedingung gehorchen, dass das Verhältnis der Länge 1 der Grundfläche des Prismas zu seiner Höhe h ≥ 4 beträgt. So wird gewährleistet, dass nur eine minimale Zahl an Gitterscharen, die bevorzugt die 020 Gitternetzebene enthalten, in dem Kristall vorliegt und somit die Leitfähigkeit des Kristalls bzw. eines entsprechenden Kristallpulvers verbessert wird.

Der Vorteil der vorstehend erwähnten Dimensionen des erfindungsgemäßen Materials liegt darin, dass die Teilchen eine größere Oberfläche für eine spezielle Gitterfläche zur Verfügung stellen. Ebenso kann eine höhere Packungsdichte von bis zu 2,5 g/cm³ derartiger flachprismatischer Partikel erzielt werden.

Aufgrund der besonderen nachstehend erläuterten Morphologie werden bei dem erfindungsgemäßen Nanomaterial die vorstehend beschriebenen Nachteile kleiner Teilchengrößen vermieden. Es ist daher insbesondere weiter bevorzugt, dass das Verhältnis des mittleren Durchmessers der Basalflächen {010} zur Höhe h der flachprismatischen Kristalle überwiegend größer 4:1 ist. Insbesondere ist bevorzugt, dass der mittlere Durchmesser der Basalflächen im Bereich von 1 bis 15 µm liegt, bevorzugt 1 bis 5 µm und die Höhe 10 bis 100 nm beträgt. Die genannten morphologischen Eigenschaften lassen sich beispielsweise mit dem Rasterelektronenmikroskop nachweisen.

Im Rahmen der vorliegenden Erfindung ist es insgesamt wichtig, dass die vorstehend gemachten Vorteile sich nicht nur auf dotierte und undotierte Lithiumeisenphosphatpartikel, sondern ebenfalls auf andere Olivinstrukturen wie LiMnPO₄, LiCoPO₄, LiNiPO₄, etc. beziehen.

Wie schon vorstehend beschrieben, führen zu große Nanomaterialpartikel bei Ihrem Einsatz als regelmäßig oder unregelmäßig gepackte Schicht in bzw. auf einer Elektrode in einer Batterie bei hohen Lade-Entladeströmen zu einer kinetisch kontrollierten Begrenzung der einem Akkumulator entnehmbaren Kapazität, sofern das erfindungsgemäße Nanomaterial als Elektrodenmaterial verwendet wird, da die Lithiumionen nicht mehr schnell genug durch die Grenzschicht LiFePO₄/FePO₄ wandern können. Daher sind die vorstehend geschilderten kleinen flachprismatischen erfindungsgemäßen Partikel bei derartigen Anwendungen von besonders großem Vorteil.

Die der vorliegenden Erfindung zugrunde liegende Aufgabe wird weiter durch ein Verfahren zur Herstellung des erfindungsgemäßen kristallinen Nanomaterials gelöst. Dieses Verfahren umfasst die Schritte
a) des Herstellens einer Vorläuferverbindung in Lösung, wobei die Vorläuferverbindung aus einer Lithiumverbindung, einer Verbindung enthaltend Metallionen M und einer Phosphatverbindung zusammengesetzt ist unter Zugabe einer Templatverbindung
b) des Ausfällens der Vorläuferverbindung aus der Lösung und ggf. des Bildens einer Suspension der Vorläuferverbindung,
c) des Dispergierens und/oder des Mahlen der Vorläuferverbindung und/oder der Suspension während des Ausfällens,
d) des Umsetzens der Vorläuferverbindung und/oder der Suspension unter hydrothermalen Bedingungen,
e) des Gewinnens des kristallinen Materials.

Durch die Kombination aus Dispergieren und/oder Mahlens während des Ausfällens des Vorläufermaterials in Verbindung mit der nachfolgenden hydrothermalen Umsetzung erhält man überraschenderweise ein monomodales erfindungsgemäßes Nanomaterial, das in Form von flachen Prismen vorliegt und eine einheitliche Größenverteilung aufweist. Die Auskristallisation des Nanomaterials kann so in Richtung der gewünschten flachprismatischen, plättchenförmigen Morphologie gesteuert werden. Die Metallionen M sind ausgewählt aus Cr, Mn, Co, Fe und Ni sowie Mischungen davon, so dass auch wie vorstehend schon geschildert eine Vielzahl von an spezifische Anforderungen angepassten dotierten und nicht-dotierten Materialien bereitgestellt werden kann.

Verglichen mit herkömmlichen Sinterverfahren bietet die Hydrothermalbehandlung, die in einer ganz besonders bevorzugten Ausführungsform unter gleichzeitigem Rühren der Suspension erfolgt, den Vorteil, dass überraschenderweise zum einen die Morphologie zum andern die Partikelgrößenverteilung gezielt eingestellt werden kann. Dies wird insbesondere durch die dort gewählte Temperaturführung sowie durch den Energieeintrag des verwendeten Rührers, insbesondere durch die Regelung der Rührerdrehzahl während der Hydrothermalbehandlung erreicht.

Auch Schritt b), das optionale Bilden einer Suspension, hat einen überraschenden Einfluß auf die Kristallitmorphologie, da die Konzentration der Suspension die Form der Kristallite mitbeeinflusst.

Bevorzugterweise wird Schritt d) unter Rühren bei einer Temperatur im Bereich von 100 bis 250°C durchgeführt sowie bei einem Druck von 1bar bis 40 bar Dampfdruck, um das erfindungsgemäße Nanomaterial zu erhalten. Ein typisches Temperaturprotokoll für die Hydrothermalbehandlung ist z.B. ein Aufheizen über 1 bis 2,5 Stunden von ca. Raumtemperatur oder leicht erhöhter Raumtemperatur wie z.B. 30 bis 45°C auf einen Temperaturbereich von 130 bis 185°C, in dem die Vorläuferverbindung bzw. deren Suspension über einen Zeitraum von ca. 8 bis 13 h gehalten wird gefolgt von einem langsamen Abkühlen der Suspension über einen Zeitraum von 2 bis 5 h auf Raumtemperatur.

An die Hydrothermalbehandlung kann sich, wie weiter untern ausgeführt, in einer weiteren Ausführungsform eine Abtrennung des erfindungsgemäßen Nanomaterials aus der Suspension, z.b, über Filtration und/oder Zentrifugation anschließen. Auch ein optionaler Waschschritt des erfindungsgemäßen Materials ist in einer weiteren Ausführungsform von Nutzen. Dies insbesondere dann, wenn die Salzfracht in dem Endprodukt verringert werden soll. Eine sorgfältige Trocknung ist dann in den Fällen erforderlich, wenn ein Einsatz des erfindungsgemäßen Nanomaterials beispielsweise als Elektrodenmaterial in Lithiumionenbatterien geplant ist, da schon geringe Feuchtigkeitsspuren eine Zersetzung des Elektrolyten hervorrufen können.

Die Trocknung, sofern erforderlich, erfolgt beispielsweise unter Schutzgas. Die Trocknung kann über einen weiten Temperaturbereich vorgenommen werden, z.B. von etwa 50 bis 750°C, ohne dass eine Änderung der Kristallmorphologie auftritt.

Bevorzugt erfolgt die Dispergier- oder Mahlbehandlung in Schritt c) bevor das Ausfällen der Vorläuferverbindung abgeschlossen ist, so dass die gewünschte monomodale Partikelverteilung gewährleistet ist.

In Schritt a) des erfindungsgemäßen Verfahrens wird eine "Templatverbindung", bevorzugt eine kationische Templatverbindung, beispielsweise ein quartäres Ammoniumsalz oder eine andere Verbindungsklasse, wie eine andere oberflächenaktive Verbindungen wie z.B. Polyacrylimide, Polyzucker (z.B. kationische Stärke) oder Polyethylenimine, zugegeben, die als Impfkeim oder Matrix für die Ausfällung des gewünschten Vorläufermaterials dient. Es wurde überraschenderweise gefunden, dass die Funktion dieser "Templatverbindungen", also der quartären Ammoniumsalze, z.B. Tetraalkylammoniumhalogenide oder besagte Polyacrylimide oder Polyethylenimine, darin besteht, sich über ihren positiv geladenen Teil großflächig an die sich bildenden negativ geladenen Kristalloberflächen von LiMPO₄ anzulagern und so diese Flächen für ein weiteres Wachstum zu blockieren, so dass Kristalle nur an den senkrecht dazu stehenden Flächen wachsen können. Damit verringern diese "Templatverbindungen" die spezifische Oberflächenenergie der wachsenden Kristallite. Dies führt bevorzugt dazu, dass das Wachstum von besonders flachen Prismen gegenüber anderen Kristallformen begünstigt ist. Überraschenderweise wurde darüberhinaus gefunden, dass die Zugabe einer derartigen "Templatverbindung" auch noch in Schritt c) und /oder d), also auch während bzw. gleichzeitig mit der Dispergatorbehandlung erfolgen kann, um die gewünschte Teilchenmorphologie zu ergeben.

Weiter ist bevorzugt, dass die mindestens drei Komponenten in Schritt a) im Konzentrationsverhältnis von 1:1:1 oder mit einem Li-überschuss von 1:1:3 miteinander gemischt werden. Abweichungen von den genannten idealen Verhältnissen von je ca. 10-20% von den oben genannten Verhältnissen können toleriert werden. Ein Überschuss an Li kann zur Erzielung einer bestimmten Morphologie im Einzelfall sogar beabsichtigt sein.

Bevorzugte und praktische Ausgangsverbindungen zur Durchführung des erfindungsgemäßen Verfahrens sind im Falle der Lithiumverbindung LiOH oder Li₂CO₃. Als Metallverbindungen werden Verbindungen von Übergangsmetallen der ersten Reihe, wie Mn, Cr, Co, Fe und Ni eingesetzt, bevorzugt deren Sulfate, Halogenide, Nitrate, Phosphate, Carboxylate und Acetylacetonate. Die Phosphatverbindung ist eine Phosphorsäure, ein Phosphat, ein Hydrogenphosphat oder ein Dihydrogenphosphat. Die Herstellung der Vorläuferverbindung erfolgt in einem polaren Lösungsmittel, im Allgemeinen wird dies Wasser sein.

Die vorliegende Erfindung wird weiter anhand von als nichteinschränkend verstandenen Ausführungsbeispielen und Figuren näher erläutert. Dabei zeigen:
Fig. 1 ein Pulverdiffraktogramm des erfindungsgemäßen Nanomaterials;
Fig. 2 ein Pulverdiffraktogramm eines herkömmlichen Nanomaterials.
Fig. 3 eine Rasterelektronenmikroskopaufnahme des erfindungsgemäßen Nanomaterials

Ausführungsbeispiele:

### Beispiel 1:

### Herstellung von LiFePO₄ nach dem erfindungsgemäßen Verfahren

Die Umsetzung der einzelnen Ausgangsprodukte zum Vorläufermaterial erfolgte gemäß der nachstehenden Reaktionsgleichung:

FeSO₄ • 7 H₂O + H₃PO₄ + 3 LiOH • H₂O → LiFePO₄ + Li₂SO₄ + 11 H₂O

LiFePO₄ ist als fertiges Produkt bei Raumtemperatur an Luft ohne Oxidation lagerbar.

Bei der Herstellung von LiFePO₄ nach der angegebenen Reaktionsgleichung ist zu beachten, dass LiFe^{II}PO₄ aus einer wässrigen Fe^{+II}-Vorläuferlösung gefällt wird. Die Umsetzung und Trocknung/Sinterung erfolgt daher unter Schutzgas oder Vakuum, um eine teilweise Oxidation von Fe^{+II} zu Fe^{+III} verbunden mit der Bildung von Nebenprodukten wie Fe₂O₃ oder FePO₄ zu vermeiden.

### Herstellung und Fällung einer Vorläufermischung

417,04 g FeSO₄ • 7 H₂O wurden in ca. 1 l destilliertem Wasser gelöst und es wurde langsam unter Rühren 172,74 g 85%ige Phosphorsäure zugegeben. Anschließend wurde mit destilliertem Wasser auf 1,5 1 aufgefüllt. Die saure Lösung wurde im Laborautoklaven (Volumen: 1 Gallone) bei 400 UPM Rührergeschwindigkeit vorgelegt, der Autoklav über das Tauchrohr mit ca. 6 - 7 bar Stickstoff beaufschlagt und über das Ehtlüftungsventil wieder entspannt. Dieser Vorgang wurde zweimal wiederholt. 188,82 g Lithiumhydroxid LiOH • H₂O wurden in 1 1 destilliertem Wasser gelöst.

Am Autoklaven wird zur Durchführung der Dispergier- oder Mahlbehandlung gemäß der vorliegenden Erfindung ein Dispergator zwischen Entlüftungsventil und Bodenablassventil angeschlossen. Im Rahmen der vorliegenden Erfindung kann jeder beliebige handelsübliche Dispergator verwendet werden. Beispiele für geeignete Dispergatoren sind beispielsweise der Dispergator der Firma IKA, Labor Pilot 2000/4 mit Dispergierkammer UTL. Wichtig im Zusammenhang mit der vorliegenden Erfindung ist nur, dass die Pumprichtung des Dispergators in der Richtung Bodenablassventil - Dispergator - Entlüftungsventil ist. Der Dispergator wird auf mittlerer Leistungsstufe, typischerweise zwischen 12 bis 15000 UPM nach den Angaben des jeweiligen Herstellers gestartet.

Anschließend wurde die vorbereitete LiOH-Lösung mit einer Pumpe, beispielsweise einer Prominent -Membranpumpe oder einer anderen dafür geeigneten Pumpe, über das Tauchrohr in den Autoklaven gepumpt. Typische Leistungsmerkmale einer geeigneten Pumpe waren ein Hub 100%, 180 Hübe/Minute; dies entspricht üblicherweise der höchsten Leistung der Pumpe und mit ca. 500 bis 600 ml destilliertem Wasser nachgespült. Der Vorgang dauerte etwa 20 Minuten, wobei die Temperatur der entstandenen Suspension auf ca. 35°C stieg. Die Zugabe der richtigen Wassermenge und damit die gewählte Konzentration der Suspension beeinflusst ebenfalls die Kristallitmorphologie. Es hat sich gezeigt, dass mit den oben angegebenen Werten die flachprismatischen Kristallite der Erfindung besonder zuverlässig erhalten werden können. Nach Zupumpen und Nachspülen wurde die Suspension im Autoklaven auf 50°C erhitzt. Wichtig ist hier nur, dass der Temperaturbereich von 40 bis 80°C, besonders bevorzugt von 45 bis 65°C eingehalten wird. Nach Zugabe des Lithiumhydroxids fiel ein grünlichbrauner Niederschlag aus.

Der Dispergator, der vor Beginn der LiOH-Zugabe gestartet wurde, wurde insgesamt etwa 1 Stunde zur Intensivmischung bzw. Vermahlung der nach Zupumpen der LiOH-Lösung bei 50°C entstandenen, sehr viskosen Suspension eingesetzt. Die mittlere Teilchengröße betrug danach D90= 13,2 µm.

Die Messung der Teilchengrößen in der Precursorsuspension erfolgte mit Hilfe dem Fachmann bekannter Methoden, beispielsweise mittels Lichtstreuung (CCD Messung) an suspendierten Kristalliten.

Die Verwendung eines Dispergators bewirkte eine sehr intensive Vermischung und Deagglomerierung der gefällten viskosen Vormischung. Bei der dabei ablaufenden Fällung und Kristallisation der Precursorsuspension entstand durch die Vorvermahlung bzw. Intensivvermischung im Dispergator eine homogene Mischung aus vielen kleinen, etwa gleich großen Kristallkeimen. Diese Kristallkeime kristallisierten bei der sich anschließenden Hydrothermalbehandlung zu sehr gleichmäßig gewachsenen flachprismatischen Kristallen des Endprodukts Li-FePO₄ mit einer sehr engen Partikelgrößenverteilung. Der Leistungs- bzw. Energieeintrag über die Dispergierbehandlung lag bei mehr als 7 kW/m³ bzw. mehr als 7 kWh/m³ der behandelten Vorläufermischung/-Suspension.

### Hydrothermalbehandlung:

Die jeweils frisch hergestellte Suspension wurde in einem Autoklaven hydrothermal behandelt. Vorher wurde nach dem Abschalten und Abklemmen des Dispergators der Ansatz während 1,5 Stunden auf 160°C erhitzt. Wie schon vorstehend erwähnt ist auch das Temperaturprotokoll bei der Hydrothermalbehandlung von Wichtigkeit, um das erfindungsgemäße material zu erhalten. Vor dem Erwärmen der Suspension wurde der Autoklav mit Stickstoff oder einem anderen Inertgas gespült, um vorhandene Luft vor dem Hydrothermalprozess aus dem Autoklaven zu verdrängen. Kristallines LiFePO₄ in Form von flachen Prismen bildete sich ab Hydrothermaltemperaturen von etwa 100 bis 120°C.

Ein besonders bevorzugtes Temperaturprotokoll für die Hydrothermalbehandlung ist z.B. ein Aufheizen über 1 bis 2,5 Stunden von ca. Raumtemperatur oder leicht erhöhter Raumtemperatur wie z.B. 30 bis 45°C auf einen Temperaturbereich von 130 bis 185°C, in dem die Vorläuferverbindung bzw. deren Suspension über einen Zeitraum von ca. 8 bis 13 h gehalten wird gefolgt von einem langsamen Abkühlen der Suspension über einen Zeitraum von 2 bis 5 h auf Raumtemperatur. Im vorliegenden Fall wurde die Hydrothermalbehandlung über 10 Stunden bei 160°C durchgeführt und anschließend wurde über 3 Stunden auf 30°C abgekühlt.

Es ist ebenfalls bevorzugt, dass während der Hydrothermalbehandlung die Suspension gerührt wird. Auch hier ist die Art des Rührers an sich beliebig, bevorzugt werden jedoch die vorstehend schon genannten Rührertypen eingesetzt, wobei sich Schrägblattrührer als besonders vorteilhaft erwiesen haben. Typische Drehzahlen des eingesetzten Rührers liegen bei 250 bis 600 UPM, bevorzugt bei 350 bis 450 UPM.

Nach dem Hydrothermalprozess wurde das erfindungsgemäße Nanomaterial abfiltriert und gewaschen. Danach kann das erfindungsgemäße LiFePO₄ ohne sichtbare Oxidation an Luft oder im Trockenschrank, z.B. bei Temperaturen von ca. 40°C getrocknet werden.

Alternativ dazu erfolgte noch anschließend eine Weiterverarbeitung des wie vorstehend beschrieben erhaltenen Materials, bei der die Filtrationsbedingungen verschieden waren:
Nach der Hydrothermalbehandlung wurde die abgekühlte Suspension (max. 30°C) unter Stickstoffatmosphäre durch das Bodenablassventil des Autoklaven in einen Druckfilter gepumpt (sog. "Seitz-Filter"). Dabei wurde die Pumpe, beispielsweise eine Prominent-Membranpumpe so eingestellt, dass ein Druck von 5 bar nicht überschritten wird. Der Filterkuchen wurde so lange mit destilliertem Wasser nachgewaschen, bis die Leitfähigkeit des Waschwassers 200 uS/cm unterschreitet.

Der Filterkuchen wurde im Vakuumtrockenschrank bei 70°C über Nacht auf eine Restfeuchte unter 5% vorgetrocknet und anschließend in einem Schutzgasofen ("Linn KS 80-S") unter einem Formiergasstrom (90% N₂/10% H₂) von 2001/h bei 250°C auf eine Restfeuchte <0,5% nachgetrocknet. Anschließend wurde das erfindungsgemäße LiFePO₄ Nanomaterial in einer Labor-Rotormühle ("Fritsch Pulverisette 14") mit einem 0,08 mm Sieb deagglomeriert.

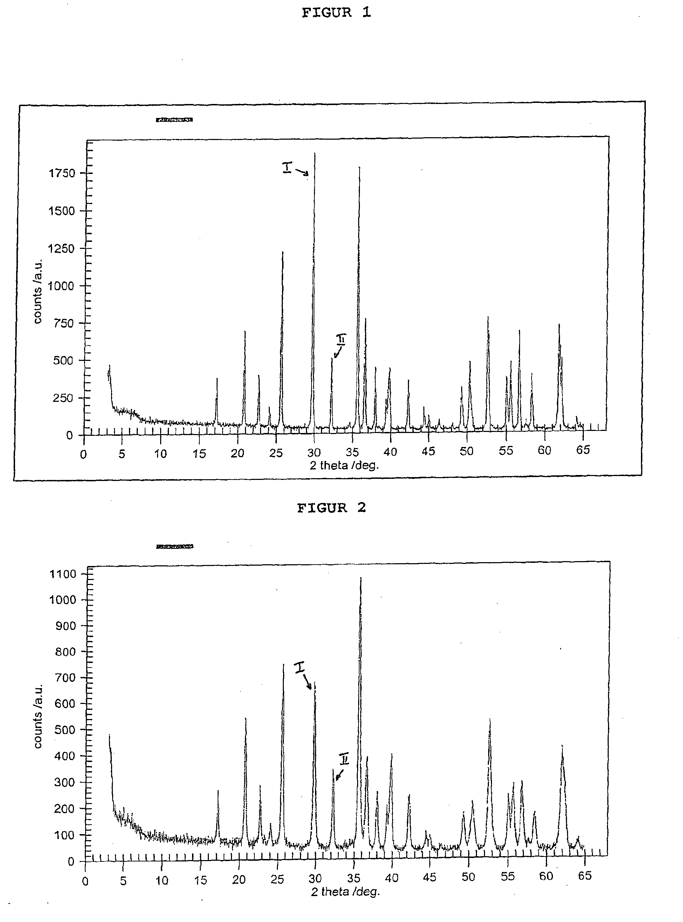

Die sich dabei ergebende typische Partikelgrößenverteilung des fertigen LiFePO₄ (mit Dispergator-Behandlung, nach Hydrothermalbehandlung, Trocknen und Deagglomeration wie vorstehend beschrieben) betrug für auf den Teilchenanteil (%) bezogenen Werte D50-Wert kleiner 0,5 µm; D10-Wert kleiner 0,35 µm; D90-Wert kleiner 2,0 µm; Differenz zwischen dem D90-Wert und dem D10-Wert kleiner 1,5 µm. Es zeigte sich, dass durch die Dispergator und Hydrothermalbehandlung eine einheitliche Größe (monomodale Größenverteilung) und Form des entstandenen erfindungsgemäßen Nanomaterials erzielt werden konnte. Natürlich ist durch geeignete Wahl der Dispergier- und Hydrothermalbedingungen auch eine gezielte bimodale Verteilung der Partikelgrößen möglich. In Figur 1 ist ein Pulverdiffraktogramm und in Figur 2 eine rasterelektronenmikroskopische Aufnahme des so erhaltenen Produktes gezeigt.

Überraschenderweise wurde gefunden, dass das erfindungsgemäße Material einen sogenannten "Textureffekt" bei Beugung an der Pulverprobe der erfindungsgemäßen Kristallite aufweist. Diese Veränderung betrifft die Intensität der den 0k0 zugeordneten Reflexen und insbesondere dem Reflex, der der 020 Gitternetzebene entspricht (markiert als I). Auffallend ist das Verhältnis dieses Reflexes zum dazu senkrechten Reflex II, der der 301 Gitternetzebene entspricht. Das Verhältnis I:II ist im vorliegenden Fall >3,5. Da die Lithiumionenleitung senkrecht zu den 0k0 Gitternetzscharen, insbesondere senkrecht zur 020 Gitternetzebene erfolgt, ist das Auftreten dieses sogenannten "Textureffekts" ein Anzeichen für eine besonders ausgeprägte Lithiumionenleitung des erfindungsgemäßen Nanomaterials.

Wie schon gesagt, kann dieser Textureffekt insbesondere weiter vorteilhaft am Intensitätsverhältnis der überlagerten Reflexe 020+211 zu 301 festgestellt werden, weil diese Reflexe im Röntgenpulverdiffraktogramm nahe beieinander liegen und daher für sie ähnliche systematische Fehler gelten, so dass ihr Intensitätsverhältnis besonders zuverlässig gemessen werden kann. Es hat sich gezeigt, dass sich das so präparierte und gemessene erfindungsgemäße Material durch ein Intensitätsverhältnis I(020+211) : I(301) größer 2,6 : 1, bevorzugt größer 3 : 1, besonders bevorzugt größer 3,5 : 1 auszeichnet.

Dieser Textureffekt ist gegenüber einem Material des Standes der Technik, wie es in Figur 2 gezeigt ist besonders ausgeprägt. Dort ist das entsprechende Verhältnis kleiner als 2,6.

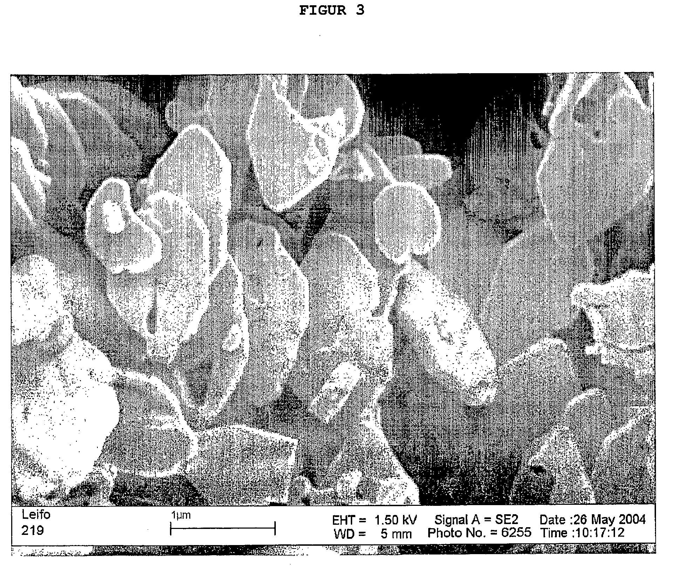

Figur 3 zeigt eine Rasterelektronenmikroskopaufnahme des erfindungsgemäßen Nanomaterials und man erkennt die monomodale Größenverteilung der flachen Prismen.

### Vergleichsbeispiel:

Zum Vergleich wurde LiFePO₄ nach dem gleichen Syntheseverfahren wie in Beispiel 1 beschrieben hergestellt, jedoch ohne Dispergatorbehandlung. Es wurde unter sonst gleichen Reaktionsbedingungen eine deutlich breitere Partikelgrößenverteilung unterschiedlicher Kristallform mit einem größeren Anteil an verwachsenen Agglomeratstrukturen erhalten. Der D₉₀-Wert (auf Volumenanteil oder auf Teilchenzahl bezogen) lag nach Zugabe der LiOH-Lösung bei mehr als 200 µm. Das erhaltene LiFePO₄ war zwar ebenfalls phasenrein, wies jedoch eine Vielzahl von unterschiedlichen Kristallformen auf und außerdem eine deutlich gröbere (multimodale) Partikelgrößenverteilung des fertigen LiFePO₄ (nach Hydrothermalbehandlung, Trocknen und Deagglomeration).

### Beispiel 2:

### Herstellung von LiFePO₄ nach einem erfindungsgemäßen Verfahren einschließlich Hydrothermalbehandlung

LiFePO₄ wurde nach dem gleichen Syntheseverfahren wie in Beispiel 1 beschrieben hergestellt, jedoch wurde der Dispergator (hier ein Dispergator der Firma IKA, ULTRATURRAX® UTL 25 Basic Inline mit Dispergierkammer DK 25.11) auf der höchsten Leistungsstufe betrieben. Die Teilchengröße der Suspension nach der Dispergatorbehandlung lag bei D₉₀= 10,8 µm.

Die Hydrothermalbehandlung, Filtration, Trocknung und Deagglomeration erfolgte wie in Beispiel 1 angegeben. Die dabei erhaltene typische Partikelgrößenverteilung (auf den Teilchenanteil (%) bezogenen Werte) des monomodalen flachprismatischen LiFePO₄ waren wie folgt: D50-Wert kleiner 0,5 µm; D10-Wert kleiner 0,35 µm; D90-Wert kleiner 2,0 µm; Differenz zwischen dem D90-Wert und dem D10-Wert kleiner 1,0 µm.

In elektrochemischen Tests zeigte das erfindungsgemäße LiFe-PO₄ Nanomaterial gegenüber dem Vergleichsmaterial sowie einem durch ein reines Sinterverfahren gemäß dem Stand der Technik hergestellten Material die besten Eigenschaften bei einer Verwendung als Elektrode, insbesondere bei hohe Lade/Entladeraten.

### Beispiel 3:

### Herstellung von LiFePO₄ nach dem erfindungsgemässen Verfahren einschließlich Hydrothermalbehandlung

21,894 kg FeSO₄* 7H₂O wurden in 42 1 deionisiertem Wasser gelöst und es wurde langsam unter Rühren 9,080 kg 85%ige Phosphorsäure zugegeben. Die saure Lösung wurde in einem emaillierten 2001 Autoklaven mit Ankerrührer vorgelegt und bei 45 UPM gerührt. Der Kopfraum des Autoklaven wurde vor dem Verschließen mit Stickstoff gespült. Die saure Lösung wurde über eine Kreiselpumpe mit ca. 5kW Leistungsaufnahme und mit einer gemessenen Durchflussleistung von durchschnittlich 70001/h umgepumpt. Dabei wird die Lösung über das Bodenablassventil des Autoklaven entnommen und über einen Deckelflansch wieder zugeführt. 10,289 kg LiOH*H₂O werden in 621 deionisiertem Wasser gelöst. Diese alkalische Lösung wird über eine Monopumpe und eine Injektordüse der umgepumpten sauren Lösung auf der Druckseite der Kreiselpumpe zugeführt. Dieser Vorgang dauert 15 min, wobei die Temperatur der umgepumpten Lösung von 18,3°C auf 42,1°C ansteigt. Die dabei entstehende Suspension wird weiter für 45 min mit der Kreiselpumpe umgepumpt und mit dem Ankerrührer bei 45 UPM gerührt, wobei sich die Temperatur auf 51,1°C weiter erhöht. Die Kreiselpumpe sorgt erfindungsgemäß während des gesamten Vorganges mit ihrer hohen Turbulenzwirkung für die Bildung einer feinteiligen Suspension, wobei vergleichbare Teilchengrößenverteilungen wie in Beispiel 1 erzielt werden konnten.

Nach dem Abschalten und Abklemmen der externen Geräte wurde der Autoklav druckfest verschlossen und unter ständigem Rühren bei 90 UPM in 1,5h auf 160°C aufgeheizt und für 10h auf dieser Temperatur gehalten. Danach wurde er innerhalb von 3h auf 20°C abgekühlt und die fertige LiFeP04-Suspension analog zu Beispiel 1 in einem "Seitz-Filter" filtriert. Der pH-Wert des Filtrats lag bei 7,5. Anschließend wurde mit deionisiertem Wasser gewaschen, bis das Filtrat einen Leitwert von weniger als 480uS hat. Der weißlich-graue, feste und zum Zerfließen neigende Filterkuchen wurde bei 70°C über Nacht im Vakuumtrockenschrank bei <100mbar getrocknet und in einer Labor-Rotormühle ("Fritsch Pulverisette 14") mit einem 0,08mm Sieb deagglomeriert. Die danach erhaltenen Teilchengrößenverteilungen des erfindungsgemäßen Nanomaterials lagen im selben Bereich wie in Beispiel 1 angegeben.

Bei Versuchen zur Ausrichtung des erfindungsgemäßen Nanomaterials hat sich gezeigt, dass sich die erfindungsgemäßen Flachprismen bei willkürlicher Anordnung in einer plastischen Matrix durch angelegte äußere Kräfte (Druck, Scherung etc) entlang Ihrer 0k0, bevorzugt entlang ihrer 020 Gitternetzebene ausrichten.

### Beispiel 4:

### Präparation einer Pulverprobe der Beispiele 1 bis 3 sowie des Vergleichsbeispiels für XRD Aufnahmen

Zur Präparation einer Texturprobe wird ein Spatel der Pulverprobe in etwas Isopropanol zu einer dünnflüssigen Suspension aufgeschlämmt, über eine Glasplatte oder eine röntgenamorphe Kunststoffplatte gegossen und getrocknet, so dass ein möglichst kreisrunder Bereich von mindestens 15 mm Durchmesser in der Mitte der Platte mit einem gleichmäßigen Überzug des Pulvers versehen ist und die flachprismatischen Kristalle Gelegenheit haben, sich parallel einzuregeln. Die Pulverprobe kann gegebenenfalls mit einer weiteren Glasplatte eben gedrückt werden und mit einem Haarfestiger-Spray oder dgl. fixiert werden. Die Probenplatte wird tangential zum Fokussierungskreis und mittig im Probenhalter eines Röntgenstrahlpulverdiffraktometers mit Bragg-Brentano Geometrie montiert und mit variabler Blende V6, aber ansonsten beliebigen Blendeneinstellungen gemessen. Die gemessenen Beugungsspektren werden mit einer handelsüblichen Software zur Korrektur des Untergrundes und zum Ausmessen der Reflexintensitäten (=Peakflächen) ausgewertet und das Intensitätsverhältnis I(020+211) : 301 gebildet.

## Patentansprüche

1. Kristallines ionenleitendes Material bestehend aus LiMPO₄ Nanopartikeln, wobei M ausgewählt ist aus Cr, Mn, Co, Fe und Ni sowie Mischungen davon, wobei die Nanopartikel eine im Wesentlichen flachprismatische Form und eine monomodale Größenverteilung aufweisen.

2. Kristallines Material nach Anspruch 1, wobei eine Schar von aufeinanderfolgenden Gitternetzebenen parallel zur Grundfläche des Prismas verläuft.

3. Kristallines Material nach Anspruch 2, wobei die Schar der Gitternetzebenen die 0k0 Gitternetzebenen sind, worin k eine ganze Zahl ≥ 1 ist.

4. Kristallines Material nach Anspruch 3, wobei die Schar der Gitternetzebenen die 020 Gitternetzebene enthält.

5. Kristallines Material nach einem der vorhergehenden Ansprüche, wobei das Verhältnis der Intensitäten zweier ausgewählter Reflexe in einem Röntgenpulverdiffraktogramm des kristallinen Materials größer als 2,6 : 1 ist, wobei die Reflexe zueinander senkrecht angeordnete Gitternetzebenen darstellen und eine Gitternetzebene aus der Gruppe der 0k0 Gitternetzebenen ausgewählt ist.

6. Kristallines Material nach Anspruch 5, wobei das Intensitätsverhältnis der Reflexe I(020+211) : I(301) größer als 2,6 : 1, bevorzugt größer 3 : 1 ist.

7. Kristallines Material nach einem der vorhergehenden Ansprüche, wobei das Prisma ein n-seitiges Prisma mit n ≥ 4 ist.

8. Kristallines Material nach Anspruch 7, wobei das Verhältnis der Länge l der Grundfläche des Prismas zu seiner Höhe h ≥ 4 beträgt.

9. Kristallines Material nach Anspruch 6, wobei die Länge l der Grundfläche des Prismas im Bereich von 1 bis 15 µm, bevorzugt im Bereich von 1 -5 µm liegt.

10. Kristallines Material nach Anspruch 9, wobei die Höhe h des Prismas 10 bis 100 nm beträgt.

11. Verfahren zur Herstellung eines kristallinen Materials nach einem der vorhergehenden Ansprüche, das umfasst
a) das Herstellen einer Vorläuferverbindung in Lösung aus einer Lithiumverbindung, einer Verbindung enthaltend Metallionen M und einer Phosphatverbindung unter Zugabe einer Templatverbindung,
b) das Ausfällen der Vorläuferverbindung aus der Lösung und ggf. das Bilden einer Suspension der Vorläuferverbindung,
c) das Dispergieren und/oder das Mahlen der Vorläuferverbindung und/oder der Suspension,
d) das Umsetzen der Vorläuferverbindung und/oder der Suspension unter hydrothermalen Bedingungen,
e) das Gewinnan des kristallinen Materials.

12. Verfahren nach Anspruch 9, wobei die Metallionen M ausgewählt sind aus Cr, Mn, Co, Fe und Ni sowie Mischungen davon.

13. Verfahren nach Anspruch 11, wobei die Dispergier- oder Mahlbehandlung in Schritt c) vor oder während dem Ausfällen der Vorläuferverbindung beginnt.

14. Verfahren nach Anspruch 13, wobei nach Schritt d) eine Trocknung des Umsetzungsproduktes erfolgt.

15. Verfahren nach Anspruch 14, wobei Schritt d) bei einer Temperatur im Bereich von 100 bis 250°C durchgeführt wird.

16. Verfahren nach einem der vorhergehenden Ansprüche, wobei Schritt d) bei einem Druck von 1 bar bis 40 bar Dampfdruck durchgeführt wird.

17. Verfahren nach einem der vorhergehenden Ansprüche, wobei die mindestens drei Komponenten in Schritt a) im folgenden Konzentrationsverhältnis miteinander gemischt werden.

18. Verfahren nach einem der vorhergehenden Ansprüche, wobei die Lithiumverbindung LiOH oder Li₂CO₃ ist.

19. Verfahren nach einem der vorhergehenden Ansprüche, wobei die Verbindung enthaltend Metallionen ausgewählt ist aus Metallsulfaten, -halogeniden, -nitraten, -phosphaten,-carboxylaten und -acetylacetonaten.

20. Verfahren nach einem der vorhergehenden Ansprüche, wobei die Phosphatverbindung eine Phosphorsäure, ein Phosphat, ein Hydrogenphosphat oder ein Dihydrogenphosphat ist.

21. Verfahren nach einem der vorhergehenden Ansprüche, wobei die Vorläuferverbindung in Wasser hergestellt wird.

## Claims

1. A crystalline ion-conducting material consisting of LiMPO₄ nanoparticles, M being selected from Cr, Mn, Co, Fe and Ni and mixtures thereof, the nanoparticles having a substantially flat prismatic form and a monomodal size distribution.

2. The crystalline material as claimed in claim 1, a family of successive lattice planes running parallel to the basal face of the prism.

3. The crystalline material as claimed in claim 2, the family of lattice planes being the 0k0 lattice planes, in which k is an integer ≥ 1.

4. The crystalline material as claimed in claim 3, the family of lattice planes containing the 020 lattice plane.

5. The crystalline material as claimed in any of the preceding claims, the ratio of the intensities of two selected reflections in an X-ray powder diffraction pattern of the crystalline material being greater than 2.6:1, the reflections representing lattice planes arranged perpendicular to one another, and a lattice plane being selected from the group consisting of the 0k0 lattice planes.

6. The crystalline material as claimed in claim 5, the intensity ratio of the reflections I(020+211):I(301) being greater than 2.6:1, preferably greater than 3:1.

7. The crystalline material as claimed in any of the preceding claims, the prism being an n-sided prism where n is ≥ 4.

8. The crystalline material as claimed in claim 7, the ratio of the length l of the basal face of the prism to its height h being ≥ 4.

9. The crystalline material as claimed in claim 6, the length l of the basal face of the prism being in the range from 1 to 15 µm, preferably in the range of 1-5 µm.

10. The crystalline material as claimed in claim 9, the height h of the prism being from 10 to 100 nm.

11. A method for the production of a crystalline material as claimed in any of the preceding claims, which comprises
a) the production of a precursor compound in solution from a lithium compound, a compound containing metal ions M and a phosphate compound with the addition of a template compound,
b) the precipitation of the precursor compound from the solution and optionally the formation of a suspension of the precursor compound,
c) the dispersing and/or the milling of the precursor compound and/or of the suspension,
d) the reaction of the precursor compound and/or of the suspension under hydrothermal conditions,
e) the isolation of the crystalline material.

12. The method as claimed in claim 9, the metal ions M being selected from Cr, Mn, Co, Fe and Ni and mixtures thereof.

13. The method as claimed in claim 11, the dispersing or milling treatment in step c) beginning before or during the precipitation of the precursor compound.

14. The method as claimed in claim 13, drying of the reaction product being effected after step d).

15. The method as claimed in claim 14, step d) being carried out at a temperature in the range from 100 to 250°C.

16. The method as claimed in any of the preceding claims, step d) being carried out at a pressure of from 1 bar to 40 bar vapor pressure.

17. The method as claimed in any of the preceding claims, the at least three components in step a) being mixed with one another in the following concentration ratio.

18. The method as claimed in any of the preceding claims, the lithium compound being LiOH or Li₂CO₃.

19. The method as claimed in any of the preceding claims, the compound containing metal ions being selected from metal sulfates, halides, nitrates, phosphates, carboxylates and acetylacetonates.

20. The method as claimed in any of the preceding claims, the phosphate compound being a phosphoric acid, a phosphate, a hydrogen phosphate or a dihydrogen phosphate.

21. The method as claimed in any of the preceding claims, the precursor compound being produced in water

## Revendications

1. Matériau cristallin conducteur d'ions constitué de nanoparticules de LiMPO₄, dans lequel M est sélectionné parmi Cr, Mn, Co, Fe et Ni ainsi que des mélanges de ceux-ci, dans lequel les nanoparticules présentent une forme essentiellement de prisme plat et une distribution de taille particulaire monomodale.

2. Matériau cristallin selon la revendication 1, dans lequel une famille de plans réticulaires successifs s'étend parallèlement à la face de base du prisme.

3. Matériau cristallin selon la revendication 2, dans lequel la famille de plans réticulaires est représenté par les plans réticulaires 0k0, où k est un nombre entier ≥ 1.

4. Matériau cristallin selon la revendication 3, dans lequel la famille de plans réticulaires contient le plan réticulaire 020.

5. Matériau cristallin selon l'une quelconque des revendications précédentes, dans lequel le rapport des intensités de deux reflets sélectionnés dans un diffractogramme de poudre des rayons X du matériau cristallin est supérieur à 2,6/1, dans lequel les reflets représentent des plans réticulaires disposés perpendiculairement les uns aux autres et un plan réticulaire est sélectionné parmi le groupe des plans réticulaires 0k0.

6. Matériau cristallin selon la revendication 5, dans lequel le rapport d'intensité des reflets I(020+211)/I(301) est supérieur à 2,6/1, de préférence supérieur à 3/1.

7. Matériau cristallin selon l'une quelconque des revendications précédentes, dans lequel le prisme est un prisme à n côtés avec n ≥ 4.

8. Matériau cristallin selon la revendication 7, dans lequel le rapport de la longueur 1 de la face de base du prisme sur sa hauteur h est ≥ 4.

9. Matériau cristallin selon la revendication 6, dans lequel la longueur 1 de la face de base du prisme se situe dans la plage de 1 à 15 µm, de préférence dans la plage de 1 à 5 µm.

10. Matériau cristallin selon la revendication 9, dans lequel la hauteur h du prisme va de 10 à 100 nm.

11. Procédé de fabrication d'un matériau cristallin selon l'une quelconque des revendications précédentes, qui comprend
a) la fabrication d'un composé précurseur en solution à partir d'un composé de lithium, d'un composé contenant des ions métalliques M et d'un composé de phosphate en ajoutant un composé gabarit,
b) la précipitation du composé précurseur de la solution et éventuellement la formation d'une suspension du composé précurseur,
c) la dispersion et/ou le broyage du composé précurseur et/ou de la suspension,
d) la conversion du composé précurseur et/ou de la suspension dans des conditions hydrothermales,
e) l'obtention du matériau cristallin.

12. Procédé selon la revendication 11, dans lequel les ions métalliques M sont sélectionnés parmi Cr, Mn, Co, Fe et Ni ainsi que des mélanges de ceux-ci.

13. Procédé selon la revendication 11, dans lequel le traitement de dispersion ou de broyage à l'étape c) commence avant ou pendant la précipitation du composé précurseur.

14. Procédé selon la revendication 13, dans lequel un séchage du produit de conversion est effectué après l'étape d).

15. Procédé selon la revendication 14, dans lequel l'étape d) est réalisée à une température dans la plage de 100 à 250°C.

16. Procédé selon l'une quelconque des revendications précédentes, dans lequel l'étape d) est réalisée à une pression de 1 bar à 40 bar de pression vapeur.

17. Procédé selon l'une quelconque des revendications précédentes, dans lequel les au moins trois composants à l'étape a) sont mélangés entre eux dans le rapport de concentration suivant.

18. Procédé selon l'une quelconque des revendications précédentes, dans lequel le composé de lithium est LiOH ou Li₂CO₃.

19. Procédé selon l'une quelconque des revendications précédentes, dans lequel le composé contenant des ions métalliques est sélectionné parmi des sulfates, halogénures, nitratés, phosphates, carboxylates et acétylacétonates métalliques.

20. Procédé selon l'une quelconque des revendications précédentes, dans lequel le composé de phosphate est un acide phosphorique, un phosphate, un hydrogénophosphate ou un dihydrogénophosphate.

21. Procédé selon l'une quelconque des revendications précédentes, dans lequel le composé précurseur est fabriqué dans de l'eau.
